Europäisches Patentamt

European Patent Office

Office européen des brevets

(19)

(11) Veröffentlichungsnummer: **0 169 416
B1**

(12) **EUROPÄISCHE PATENTSCHRIFT**

(45) Veröffentlichungstag der Patentschrift:
20.09.89

(51) Int. Cl.⁴: **G 01 B   7/00**, G 01 B   5/00

(21) Anmeldenummer: **85108283.4**

(22) Anmeldetag: **04.07.85**

(54) **Tasteinrichtung.**

(30) Priorität: **25.07.84 DE 3427413**

(43) Veröffentlichungstag der Anmeldung:
**29.01.86 Patentblatt 86/05**

(45) Bekanntmachung des Hinweises auf die Patenterteilung: **20.09.89 Patentblatt 89/38**

(84) Benannte Vertragsstaaten:
**AT CH DE FR GB IT LI NL SE**

(56) Entgegenhaltungen:
**EP–A– 0 106 033
DE–A– 1 932 010
FR–A– 2 384 230
FR–A– 2 512 543
GB–A–   330 882
US–A– 3 591 924
IEEE TRANSACTIONS ON INSTRUMENTATION AND MEASUREMENT, Band IM-17, Nr. 1, März 1968, Seiten 89-98, Institute of Electrical and Electronics Engineers, Inc., New York, US; P.H. SYDENHAM: "A potentiometric method for transducing large-scale position using tensioned flexible wires in trilateration"**

(73) Patentinhaber: **Dr. Johannes Heidenhain GmbH
Nansenstrasse 17
D-8225 Traunreut (DE)**

(72) Erfinder: **Schmitt, Walter, Ing. grad.
Hochgernstrasse 22
D-8225 Traunreut (DE)**

## Beschreibung

Die Erfindung betrifft eine Tasteinrichtung gemäß dem Oberbegriff des Anspruchs 1.

Derartige Tasteinrichtungen werden in Verbindung mit Koordinatenmeßmaschinen und auch in numerisch gesteuerten Bearbeitungsmaschinen eingesetzt und dienen zur Erfassung der Abmessungen von Werkstücken und von Werkzeugen.

Solche Tasteinrichtungen sind aus einer Vielzahl von Druckschriften bereits erkannt und lassen sich in zwei Kategorien einteilen. Bei der ersten Kategorie vollführen die Taststifte der Tasteinrichtungen Winkelbewegungen, wenn sie normal zu ihrer Längsachse ausgelenkt werden. Bei der zweiten Kategorie sind die Taststifte in drei Raumrichtungen parallel verschiebbar gelagert.

Bezüglich der ersten Kategorie sei beispielsweise die DE-AS 19 32 olo genannt, bei der der Taststift einer Mehrkoordinaten-Tasteinrichtung mittels eines Kugelgelenks im Inneren des Tastergehäuses gelagert ist. Eine beliebige Auslenkung des Taststiftes wird über eine spezielle Nockenfolgeeinrichtung mit einem Übersetzungskonus auf ein Sensorelement übertragen. Bei Auslenkungen des Taststiftes senkrecht zu seiner Längsachse wird der Taststift um das Kugelgelenk geschwenkt und bildet einen Winkel zu seiner ursprünglichen Achsrichtung. Die Rückstellung des Taststiftes in die ursprüngliche Ausgangslage erfolgt mittels einer Feder.

Hinsichtlich der zweiten Kategorie ist in der DE-PS 32 34 471 eine Mehrkoordinaten-Tasteinrichtung beschrieben, bei der der Taststift in einer Ebene senkrecht zur Längsachse in zwei Richtungen mittels zweier Kugelgeradführungen parallel zu seiner Längsachse und mittels einer weiteren Kugelgeradführung in seiner Längsrichtung auslenkbar gelagert ist.

In der DE-OS 27 12 181 ist ein Meßkopf beschrieben, dessen gehäusefester Teil mit einer Koordinatenmeßmaschine verbunden ist und drei Lagerkugeln aufweist; ein relativ vom gehäusefesten Teil beweglicher Meßkopfteil trägt einen Taststift und besitzt ebenfalls drei Lagerkugeln. Ein Zwischenring weist entsprechende Lager auf, in die die Lagerkugeln des gehäusefesten Teils unter der Wirkung einer im gehäusefesten Teil angeordneten Zugfeder eingreifen, die über Drähte mit dem Zwischenring verbunden ist. Die Lagerkugeln des beweglichen Meßkopfteils greifen ebenfalls in entsprechende Lager des Zwischenrings unter Wirkung von Magneten ein.

Die federbelasteten Kugelgelenke und die Kugelgeradführungen der oben genannten Tasteinrichtungen sind aber, wenn auch nur in geringem Maße, reibungsbehaftet. Derartige Reibungseffekte können sich aber bei hochempfindlichen Tasteinrichtungen nachteilig auf die Antastgenauigkeit und die Meßgenauigkeit auswirken.

In der DE-PS 31 35 495 ist ein Meßkopf mit einem Meßtaster offenbart, dessen Tasterhalter in einem Gehäuse angeordnet ist. Im Gehäuse befinden sich dem Tasterhalter gegenüberliegend noch ein Mittelgehäuse und zwischen dem Tasterhalter und dem Mittelgehäuse eine Zwischenplatte. Der Tasterhalter ist durch Seile unter Zwischenschaltung von Zugfedern mit dem Mittelgehäuse und der Zwischenplatte verbunden, die ihrerseits jeweils durch Seile unter Zwischenschaltung von Zugfedern mit dem Gehäuse verbunden sind. Die Seile mit den Zugfedern verlaufen dabei in den drei orthogonalen Richtungen eines räumlichen Koordinatensystems. Dieser Meßkopf ermöglicht zwar die reibungsfreie Lagerung des Meßtasters im Gehäuse, weist jedoch den Nachteil eines erheblichen baulichen Aufwandes auf.

Der Erfindung liegt die Aufgabe Zugrunde, bei einer Tasteinrichtung der genannten Gattung die reibungsfreie Lagerung des Taststiftes wesentlich zu vereinfachen.

Diese Aufgabe wird erfindungsgemäß durch die Einrichtung gemäß Anspruch 1 gelöst.

Die mit der Erfindung erzielten Vorteile bestehen insbesondere darin, daß durch die vorgeschlagene Lagerung des biegesteifen Taststiftes an beiden Endabschnitten mittels elastischer Spanndrähte direkt im Gehäuse der Tasteinrichtung und dadurch, daß die elastischen Spanndrähte an wenigstens einem Ende des biegesteifen Taststiftes auf einem Kegelmantel liegen, eine einfach und preiswert aufgebaute Tasteinrichtung ermöglicht wird, da die Anzahl der zur Lagerung erforderlichen Drähte wesentlich reduziert und auf zusätzliche Zwischenelemente verzichtet werden kann. Da die elastischen Spanndrähte nach der Antastung gleichzeitig eine Rückstellung des Taststiftes in eine definierte Nullage bewirken, sind gesonderte Rückstellelemente wie Federn nicht mehr erforderlich. In bevorzugter Ausbildung werden die elastischen Spanndrähte zusätzlich noch als Sensorelemente für die Auslenkungen des Taststiftes aus der definierten Nullage herangezogen, indem ihre elektrischen Widerstandsänderungen bei Längenänderungen der elastischen Spanndrähte infolge der Auslenkungen des Taststiftes gemessen werden. Insgesamt ergibt sich somit eine einfach aufgebaute und preiswerte Tasteinrichtung hoher Genauigkeit.

Weitere vorteilhafte Ausbildungen entnimmt man den Unteransprüchen.

Ausführungsbeispiele der Erfindung werden anhand der Zeichnung näher erläutert.

Es zeigen

Figur 1 eine Tasteinrichtung im Längsschnitt,

Figur 2 eine Lagerung eines Taststiftes in schematischer und perspektivischer Ansicht,

Figur 3 eine Ansicht der Lagerung des Taststiftes nach Figur 2 von oben,

Figur 4 eine weitere Lagerung eines Taststiftes in schematischer und perspektivischer Ansicht,

Figur 5 eine Auswerteschaltung und

Figur 6 eine Befestigung von Spanndrähten.

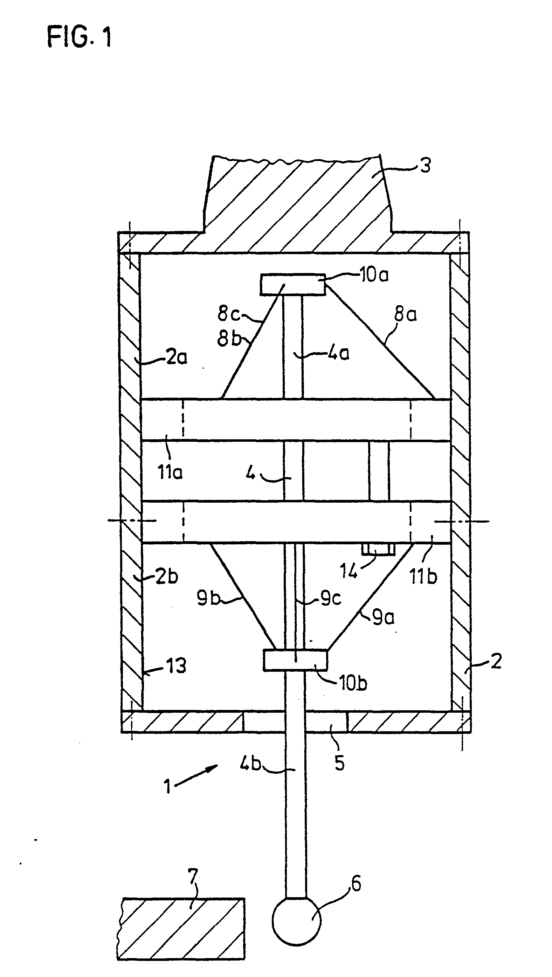

In der Figur 1 ist im Längsschnitt eine Tasteinrichtung 1 mit einem zylinderförmigen Gehäuse 2 dargestellt, das am oberen Ende 2a einen Aufnahmedorn 3 zur Aufnahme der Tasteinrichtung 1 in einer Spindel einer nicht dargestellten Meßmaschine oder Bearbeitungsmaschine aufweist. Im Inneren des Gehäuses 2 ist ein biegesteifer Taststift 4 senkrecht angeordnet, dessen aus einer Öffnung 5 im unteren Ende 2b des Gehäuses 2 herausragendes unteres Endabschnitt 4b mit einer Tastkugel 6 zum Antasten eines Prüfobjektes, beispielsweise eines Werkstücks 7, zur Ermittlung der Lage und/oder der Abmessungen dieses Werkstücks 7 versehen ist.

Zur völlig reibungsfreien Lagerung des Taststiftes 4 im Gehäuse 2 ist erfindungsgemäß der biegesteife Taststift 4 am oberen Endabschnitt 4a mittels dreier oberer elastischer Spanndrähte 8a, 8b, 8c und am unteren, der Tastkugel 6 benachbarten Endabschnitt 4b mittels dreier unterer elastischer Spanndrähte 9a, 9b, 9c im Gehäuse 2 in senkrechter Position gelagert. Zur Befestigung der drei oberen Spanndrähte 8a, 8b, 8c weisen der obere Endabschnitt 4a des Taststiftes 4 einen oberen Taststiftflansch 10a und das obere Ende 2a des Gehäuses 2 einen oberen Gehäuseflansch 11a auf; zur Befestigung der drei unteren Spanndrähte 9a, 9b, 9c sind am unteren Endabschnitt 4b des Taststiftes 4 ein unterer Taststiftflansch 10b und am unteren Ende 2b des Gehäuses 2 ein unterer Gehäuseflansch 11b vorgesehen. Die oberen und unteren Spanndrähte 8a, 8b, 8c, 9a, 9b, 9c können in beliebiger Weise an den oberen und unteren Taststiftflanschen 10a, 10b und Gehäuseflanschen 11a, 11b befestigt sein.

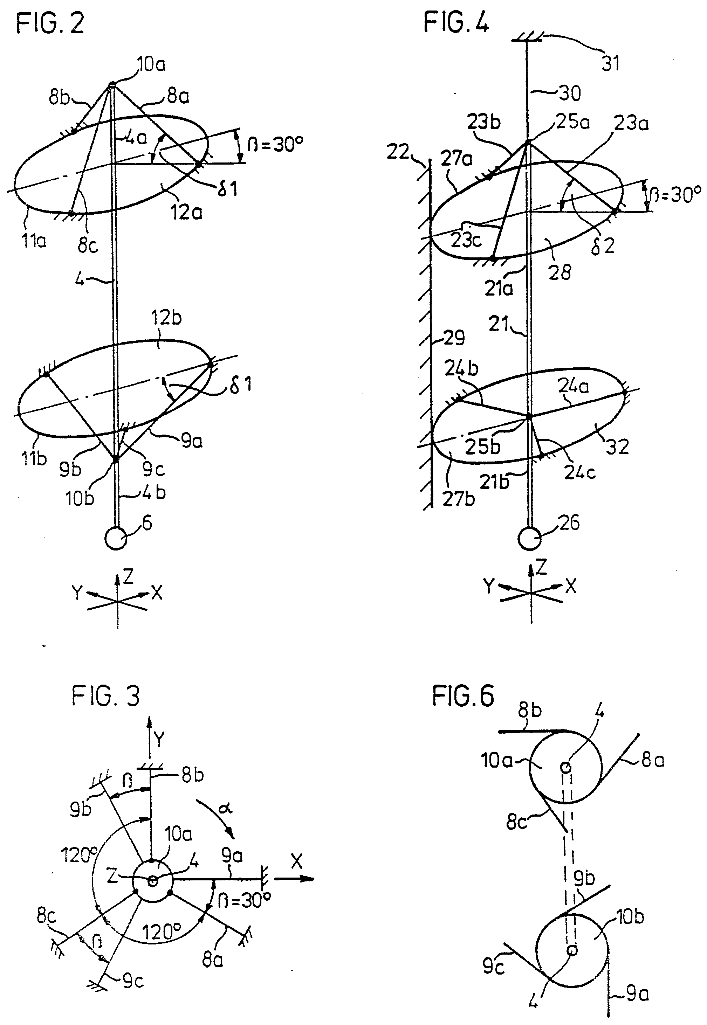

In Figur 2 ist die Lagerung des Taststiftes 4 schematisch und perspektivisch dargestellt, während Figur 3 eine Ansicht dieser Lagerung des Taststiftes 4 von oben zeigt. Wie aus den Figuren 2 und 3 ersichtlich, sind die oberen Spanndrähte 8a, 8b, 8c jeweils symmetrisch um einen Winkel von 120° gegeneinander versetzt und bilden einen oberen Spanndrahtkegel, dessen Basisfläche 12a mit den drei oberen Spanndrähten 8a, 8b, 8c jeweils einen Winkel $\delta_1$ einschließt; gleichfalls sind die unteren Spanndrähte 9a, 9b, 9c jeweils symmetrisch um einen Winkel von 120° gegeneinander versetzt und bilden einen unteren Spanndrahtkegel, dessen Basisfläche 12b mit den drei unteren Spanndrähten 9a, 9b, 9c, ebenfalls den Winkel $\delta_1$ einschließt. Die Basisfläche 12a des oberen Spanndrahtkegels und die Basisfläche 12b des unteren Spanndrahtkegels sind zueinander parallel und einander zugewandt. Die oberen Spanndrähte 8a, 8b, 8c des oberen Spanndrahtkegels sind zudem gegen die unteren Spanndrähte 9a, 9b, 9c des unteren Spanndrahtkegels um den Winkel $\beta = 30°$ versetzt.

In den Figuren 2 und 3 ist ein X, Y, Z-Koordinatensystem eingezeichnet, dessen X, Y-Ebene parallel zu den Basisflächen 12a, 12b der oberen und unteren Spanndrahtkegel liegt und dessen Z-Achse durch die Längsachse des Taststiftes 4 verläuft. Die Projektion des unteren Spanndrahtes 9a auf die Basisfläche 12b des unteren Spanndrahtkegels möge in X-Richtung verlaufen. Während der untere Gehäuseflansch 11b an der Innenwand 13 des Gehäuses 2 befestigt ist, kann der obere Gehäuseflansch 11a, der an der Innenwand 13 des Gehäuses 2 anliegt, mittels dreier Spannschrauben 14 in Richtung des unteren Gehäuseflansches 11b zur Einstellung einer bestimmten Vorspannung der oberen Spanndrähte 8a, 8b, 8c und der unteren Spanndrähte 9a, 9b, 9c verstellt werden.

Unter der Vorspannung der oberen und unteren Spanndrähte 8, 9 nimmt die Tastkugel 6 des Taststiftes 4 eine definierte Nullage bezüglich des X, Y, Z-Koordinatensystems ein. Bei der Antastung des Werkstücks 7 kann die Tastkugel 6 bzw. der Taststift 4 beliebig bezüglich des X, Y, Z-Koordinatensystems völlig reibungsfrei ausgelenkt werden und kehrt nach der Antastung des Werkstücks 7 wieder in die definierte Nullage durch die Elastizität der oberen und unteren Spanndrähte 8, 9 zurück. Die Empfindlichkeit der Auslenkungen der Tastkugel 6 bzw. des Taststiftes 4 bezüglich der X, Y, Z-Achsen kann durch Einstellung des Winkels $\delta_1$ zwischen den Basisflächen 12a, 12b der Spanndrahtkegel und den oberen und unteren Spanndrähten 8, 9 variiert werden.

Nach Figur 4 wird eine weitere völlig reibungsfreie Lagerung eines Taststiftes 21 mit einer Tastkugel 26 in einem Gehäuse 22 in schematischer und perspektivischer Darstellung vorgeschlagen. Der biegesteife Taststift 21 ist am oberen Endabschnitt 21a mittels dreier oberer elastischer Spanndrähte 23a, 23b, 23c und am unteren, der Tastkugel 26 benachbarten Endabschnitt 21b mittels dreier unterer elastischer Spanndrähte 24a, 24b, 24c im Gehäuse 22 in senkrechter Position gelagert. Zur Befestigung der drei oberen Spanndrähte 23a, 23b, 23c weist der obere Endabschnitt 21a des Taststiftes 21 einen oberen Taststiftflansch 25a und das Gehäuse 22 einen oberen Gehäuseflansch 27a auf; zur Befestigung der drei unteren Spanndrähte 24a, 24b, 24c sind am unteren Endabschnitt 21b des Taststiftes 21 ein unterer Taststiftflansch 25b und am Gehäuse 22 ein unterer Gehäuseflansch 27b vorgesehen. Die oberen und unteren Spanndrähte 23, 24 können in beliebiger Weise an den oberen und unteren Taststiftflanschen 25a, 25b und Gehäuseflanschen 27a, 27b befestigt sein.

Die oberen Spanndrähte 23a, 23b, 23c sind jeweils symmetrisch um einen Winkel von 120° gegeneinander versetzt und bilden einen Spanndrahtkegel, dessen Besisfläche 28 mit den drei oberen Spanndrähten 23a, 23b, 23c jeweils einen Winkel $\delta_2$ einschließt und senkrecht zur Längsachse des Taststiftes 21 angeordnet ist. Die unteren Spanndrähte 24a, 24b, 24c sind jeweils symmetrisch um einen Winkel von 120° gegeneinander versetzt und bilden einen ebenen, zur Basisfläche 28 des Spanndrahtkegels parallelen Spanndrahtstern. Die oberen Spanndrähte 23a, 23b, 23c des Spanndrahtkegels sind gegen die unteren Spanndrähte 24a, 24b, 24c des Spanndrahtsterns ebenfalls um den Winkel $\beta = 30°$ versetzt.

In Figur 4 ist gleichfalls ein X, Y, Z-Koordinatensystem eingezeichnet, dessen X, Y-Ebene parallel zur Basisfläche 28 des Spanndrahtkegels und zur Ebene 32 des Spanndrahtsterns liegt und dessen Z-Achse durch die Längsachse des Taststiftes 21 verläuft. Der untere Spanndraht 24a möge in X-Richtung verlaufen. Der obere Gehäuseflansch 27a und der untere Gehäuseflansch 27b sind an der Innenwand 29 des Gehäuses 22 befestigt. Zur Einstellung einer bestimmten Vorspannung der oberen Spanndrähte 23a, 23b, 23c ist ein zusätzlicher, in der Z-Achse verlaufender Spanndraht 30 am oberen Taststiftflansch 25a und am Deckel 31 des Gehäuses 22 befestigt, der von einer nicht gezeigten Spannschraube beaufschlagt wird. Der Spanndrahtstern mit den unteren Spanndrähten 24a, 24b, 24c bildet ein ebenes Stützlager für den Taststift 21 in der X, Y-Ebene, das in der Z-Richtung nachgiebig ist.

Unter der Vorspannung der oberen Spanndrähte 23a, 23b, 23c und des zusätzlichen Spanndrahtes 30 nimmt die Tastkugel 26 eine definierte Nullage bezüglich des X, Y, Z-Koordinatensystems ein. Bei der Antastung des Werkstücks 7 kann die Tastkugel 26 bzw. der Taststift 21 beliebig bezüglich des X, Y, Z-Koordinatensystems völlig reibungsfrei ausgelenkt werden und kehrt nach der Antastung des Werkstücks 7 wieder in die definierte Nullage durch die Elastizität der oberen und unteren Spanndrähte 23, 24 zurück. Die Empfindlichkeit der Auslenkungen bezüglich der X, Y, Z-Achsen kann durch die Einstellung des Winkels δ2 Zwischen der Basisfläche 28 des Spanndrahtkegels und den oberen Spanndrähten 23a, 23b, 23c variiert werden.

Die oberen Spanndrähte 8a, 8b, 8c und die unteren Spanndrähte 9a, 9b, 9c nach den Figuren 1-3 können gleichzeitig als Sensorelemente für die Auslenkungen der Tastkugel 6 bzw. des Taststiftes 4 herangezogen werden, indem ihre elektrischen Widerstandsänderungen bei Längenänderungen der oberen und unteren Spanndrähte 8, 9 infolge der Auslenkungen der Tastkugel 6 bzw. des Taststiftes 4 gemessen werden. Zu diesem Zweck müssen die Spanndrähte 8, 9 elektrisch isoliert in den Taststiftflanschen 10 und Gehäuseflanschen 11 befestigt und an ihren Enden mit nicht gezeigten elektrischen Leitungen verbunden sein.

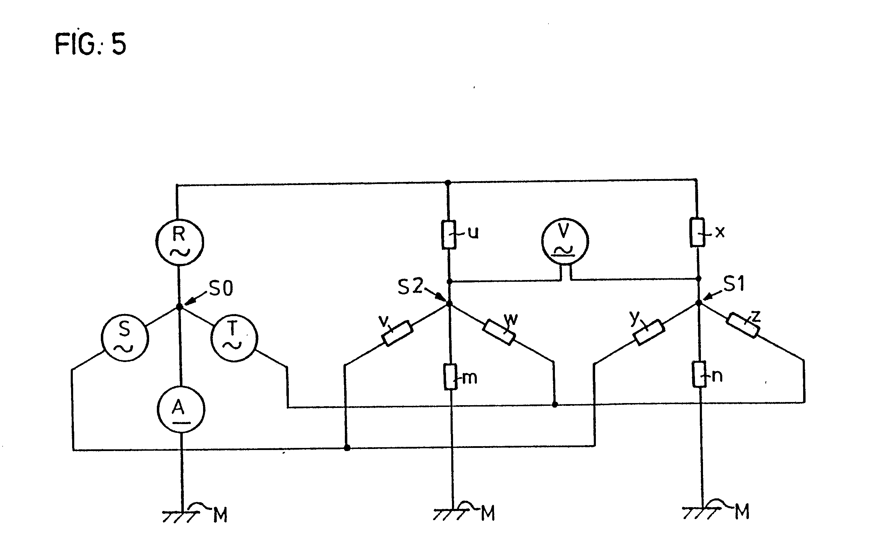

Zur Auswertung dieser Widerstandsänderungen der Spanndrähte 8, 9 ist in Figur 5 eine Auswerteschaltung in Form einer Drehstrombrückenschaltung dargestellt. Die Widerstände x, y, z der drei oberen Spanndrähte 8a, 8b, 8c und die Widerstände u, v, w der drei unteren Spanndrähte 9a, 9b, 9c sind jeweils in einer Sternschaltung S1, S2 angeordnet, die von einer Drehspannung einer Drehspannungsquelle SO in Form dreier gleicher, zueinander um 120° phasenversetzter Wechselspannungen R, S, T parallel beaufschlagt werden. Wenn sich die Tastkugel 6 in der definierten Nullage bezüglich des X, Y, Z-Koordinatensystems befindet, gilt für die Widerstände x, y, z, u, v, w in den beiden Sternschaltungen S1, S2 $x = y = z$ und $u = v = w$, so daß zwischen den beiden Sternpunkten der beiden Sternschaltungen S1, S2 keine Spannung herrscht. Bei Auslenkungen der Tastkugel 6 bzw. des Taststiftes 4 aus dieser Nullage bei Antastungen des Werkstücks 7 ergeben sich entsprechende Änderungen der Widerstände x, y, z, u, v, w, so daß zwischen den Sternpunkten der beiden Sternschaltungen S1, S2 dementsprechend Spannungen auftreten, die von einem zwischen den Sternpunkten geschalteten Voltmeter V registriert werden ; bei einer phasenmäßigen Auswertung kann sowohl der Betrag als auch die Richtung der Auslenkung der Tastkugel 6 ermittelt werden. Zur Messung der Auslenkung der Tastkugel 6 bzw. des Taststiftes 4 in der Z-Richtung wird eine zusätzliche Gleichspannung aus einer Spannungsquelle A angelegt, die zwischen dem Sternpunkt der Drehspannungsquelle SO und Masse M geschaltet ist. Zwischen dem Sternpunkt der Sternschaltung S1 und Masse M sind ein Widerstand n und zwischen dem Sternpunkt der Sternschaltung S2 und Masse M ein Widerstand m geschaltet, wobei $m \gg u/3$ und $n \gg x/3$ sowie $u/m = x/n$ sind.

Die oberen Spanndrähte 23a, 23b, 23c und der zusätzliche Spanndraht 30 nach Figur 4 können ebenfalls als Sensorelemente für die Auslenkungen der Tastkugel 26 bzw. des Taststiftes 21 aus der Nullage durch Auswertung ihrer Widerstandsänderungen herangezogen werden. Zu diesem Zweck kann gleichfalls die Auswerteschaltung nach Figur 5 verwendet werden. Die Widerstände x, y, z stellen die Widerstände der drei oberen Spanndrähte 23a, 23b, 23c und der Widerstand n den Widerstand des zusätzlichen Spanndrahtes 30 dar ; die Widerstände u, v, w, m werden durch Festwiderstände gebildet und stellen eine Referenzsternschaltung dar.

Die Versetzung der oberen Spanndrähte 8a, 8b, 8c gegen die unteren Spanndrähte 9a, 9b, 9c gemäß Figur 2 und 3 um den Winkel $\beta = 30°$ erlaubt ein Antasten einer Oberfläche des Werkstücks 7 aus beliebigen Richtungen mit gleicher Empfindlichkeit.

In nicht gezeigter Weise können die elastischen Spanndrähte 8, 9, 23, 30 auch gesonderte Sensorelemente wie Druck- oder Zugsensoren zur Messung der Auslenkungen des Taststiftes (4, 21) beaufschlagen. Zur Begrenzung der Auslenkungen des Taststiftes (4, 21) können nicht gezeigte Anschläge vorhanden sein.

Da die Taststiftflansche 10a, 10b nach den Figuren 1 und 3 endliche Durchmesser besitzen, können auch Drehbewegungen des Taststiftes 4 um seine Längsachse in Z-Richtung um den Winkel $\alpha$ ermittelt werden. Zur Steigerung der Empfindlichkeit dieser Drehbewegung um den Winkel $\alpha$ sind die oberen Spanndrähte 8a, 8b, 8c am oberen Taststiftflansch 10a und die unteren Spanndrähte 9a, 9b, 9c am unteren Taststiftflansch 10b jeweils gegenläufig tangential nach Figur 6 befestigt.

**Patentansprüche**

1. Tasteinrichtung zur Ermittlung von Lage und/oder Abmessungen von Prüfobjekten mit wenigstens einem in einem Gehäuse mittels Drähten reibungsfrei gelagerten und in mindestens einer Koordinatenrichtung auslenkbaren Taststift sowie mit wenigstens einem Sensorelement zur Erfassung der Auslenkung des Taststiftes aus einer definierten Nullage, dadurch gekennzeichnet, daß der biegesteife Taststift (4, 21) an beiden Endabschnitten (4a, 4b, 21a, 21b) allein mittels elastischer Spanndrähte (8, 9, 23, 24, 30) direkt im Gehäuse (2, 22) gelagert ist und daß die elastischen Spanndrähte (8, 9, 23) an wenigstens einem Endabschnitt (4a, 4b, 21a) des biegesteifen Taststiftes (4, 21) auf einem Kegelmantel liegen.

2. Meßeinrichtung nach Anspruch 1, dadurch gekennzeichnet, daß der biegesteife Taststift (4) am oberen Endabschnitt (4a) mittels dreier oberer elastischer, auf einem Kegelmantel liegender Spanndrähte (8a, 8b, 8c) und am unteren Endabschnitt (4b) mittels dreier unterer elastischer, auf einem Kegelmantel liegender Spanndrähte (9a, 9b, 9c) gelagert ist und daß die zueinander parallelen Basisflächen (12a, 12b) der durch die oberen Spanndrähte (8a, 8b, 8c) und der durch die unteren Spanndrähte (9a, 9b, 9c) gebildeten Kegel einander zugewandt sind.

3. Meßeinrichtung nach Anspruch 1, dadurch gekennzeichnet, daß der biegesteife Taststift (21) am oberen Endabschnitt (21a) mittels dreier oberer elastischer, auf einem Kegelmantel liegender Spanndrähte (23a, 23b, 23c) und mittels eines zusätzlichen elastischen Spanndrahts (30) und am unteren Endabschnitt (21b) mittels dreier unterer elastischer, sternförmig in einer Ebene liegender Spanndrähte (24a, 24b, 24c) gelagert ist, daß die Basisfläche (28) des durch die oberen Spanndrähte (23a, 23b, 23c) gebildeten Kegels zur Ebene (32) der unteren Spanndrähte (24a, 24b, 24c) parallel und dieser zugewandt ist und daß der zusätzliche Spanndraht (30) in Längserstreckung des Taststiftes (21) verläuft.

4. Meßeinrichtung nach Anspruch 2, dadurch gekennzeichnet, daß die Projektionen der Längsachsen sowohl der oberen als auch der unteren Spanndrähte (8a, 8b, 8c, 9a, 9b, 9c) auf die Basisflächen (12a, 12b) der durch die gebildeten Kegel jeweils eine radialsymmetrische Figur darstellen und daß diese Figuren gegeneinander um einen Drehwinkel β versetzt sind.

5. Meßeinrichtung nach Anspruch 4, dadurch gekennzeichnet, daß der Drehwinkel β = 30° beträgt.

6. Meßeinrichtung nach Anspruch 2, dadurch gekennzeichnet, daß die drei oberen Spanndrähte (8a, 8b, 8c) am Taststift (4) mittels eines oberen Taststiftflansches (10a) und am Gehäuse (2) mittels eines oberen Gehäuseflansches (11a) und die drei unteren Spanndrähte (9a, 9b, 9c) am Taststift (4) mittels eines unteren Taststiftflansches (10b) und am Gehäuse (2) mittels eines unteren Gehäuseflansches (11b) befestigt sind.

7. Meßeinrichtung nach Anspruch 3, dadurch gekennzeichnet, daß die drei oberen Spanndrähte (23a, 23b, 23c) am Taststift (21) mittels eines oberen Taststiftflansches (25a) und am Gehäuse (22) mittels eines oberen Gehäuseflansches (27a), die drei unteren Spanndrähte (24a, 24b, 24c) am Taststift (21) mittels eines unteren Taststiftflansches (25b) und am Gehäuse (22) mittels eines unteren Gehäuseflansches (27b) und der zusätzliche Spanndraht (30) am oberen Taststiftflansch (25a) und an einem Deckel (31) des Gehäuses (22) befestigt sind.

8. Meßeinrichtung nach Anspruch 1, dadurch gekennzeichnet, daß die elastischen Spanndrähte (8, 9, 23, 30) als Sensorelemente zur Messung der Auslenkungen des Taststiftes (4, 21) ausgebildet sind.

9. Meßeinrichtung nach Anspruch 8, dadurch gekennzeichnet, daß die elastischen Spanndrähte (8, 9, 23, 30) elektrische Widerstände bilden.

10. Meßeinrichtung nach Anspruch 1, dadurch gekennzeichnet, daß die elastischen Spanndrähte (8, 9, 23, 30) gesonderte Sensorelemente beaufschlagen.

11. Meßeinrichtung nach Anspruch 6, dadurch gekennzeichnet, daß die oberen Spanndrähte (8) und die unteren Spanndrähte (9) radial verlaufend an den Taststiftflanschen (10a, 10b) befestigt sind.

12. Meßeinrichtung nach Anspruch 6, dadurch gekennzeichnet, daß die oberen Spanndrähte (8) und die unteren Spanndrähte (9) jeweils gegenläufig tangential verlaufend an den Taststiftflanschen (10a, 10b) befestigt sind.

**Claims**

1. Sensing device for indicating the position and/or dimensions of test objects with at least one sensing rod mounted friction-free in a housing by means of wires and capable of deflection in at least one coordinate direction with at least one sensor element for determining the deflection of the sensing rod from a defined zero position, characterized in that the rigid sensing rod (4, 21) is mounted directly in the housing (2, 22) at both end sections (4a, 4b, 21a, 21b) solely by means of elastic tension wires (8, 9, 23, 24, 30) and in that the elastic tension wires (8, 9, 23) at at least one end section (4a, 4b, 21a) of the rigid sensing rod (4, 21) lie on a cone.

2. Measuring device according to claim 1, characterized in that the rigid sensing rod (4) is mounted at the upper end section (4a) by means of three upper elastic tension wires (8a, 8b, 8c) lying on a cone and at the lower end section (4b) by means of three lower elastic tension wires (9a, 9b, 9c) lying on a cone and in that the mutually parallel basal planes (12a, 12b) of the cones formed by the upper tension wires (8a, 8b, 8c) and by the lower tension wires (9a, 9b. 9c) face towards each other.

3. Measuring device according to claim 1, characterized in that the rigid sensing rod (21) is mounted at the upper end section (21a) by means of three upper elastic tension wires (28a, 28b, 23c) lying on a cone and by means of an additional elastic tension wire (30) and at the

lower end section (21b) by means of three lower elastic tension wires (24a, 24b, 24c) lying in star formation in a plane, in that the basal plane (28) the cone formed by the upper tension wires (23a, 23b, 23c) is parallel to and facing towards the plane (32) of the lower tension wires (24a, 24b, 24c) and in that the additional tension wire (30) runs in longitudinal extension of the sensing rod (21).

4. Measuring device according to claim 2, characterized in that the projections of the longitudinal axes of both the upper and the lower tension wires (8a, 8b, 8c, 9a, 9b, 9c) on to the basal planes (12a, 12b) of the cones formed thereby each represent a radially symmetrical figure and in that these figures are displaced relative to one another by an angle of rotation β.

5. Measuring device according to claim 4, characterized in that the angle of rotation amounts to β = 30°.

6. Measuring device according to claim 2, characterized in that the three upper tension wires (8a, 8b, 8c) are fixed to the sensing rod (4) by means of an upper sensing rod flange (10a) and to the housing (2) by means of an upper housing flange (11a) and the three lower tension wires (9a, 9b, 9c) are fixed to the sensing rod (4) by means of a lower sensing rod flange (10b) and to the housing (2) by means of a lower housing flange (11b).

7. Measuring device according to claim 3, characterized in that the three upper tension wires (23a, 23b, 23c) are fixed to the sensing rod (21) by means of an upper sensing rod flange (25a) and to the housing (22) by means of a upper housing flange (27a), the three lower tension wires (24a, 24b, 24c) are fixed to the sensing rod (21) by means of a lower sensing rod flange (25b) and to the housing (22) by means of a lower housing flange (27b) and the additional tension wire (30) is fixed to the upper sensing rod flange (25a) and to a cover (31) of the housing (22).

8. Measuring device according to claim 1, characterized in that the elastic tension wires (8, 9, 23, 30) are formed as sensor elements for measuring the deflection of the sensing rod (4, 21).

9. Measuring device according to claim 8, characterized in that the elastic tension wires (8, 9, 23, 30) form electrical resistances.

10. Measuring device according to claim 1, characterized in that the elastic tension wires (8, 9, 23, 30) act on separate sensor elements.

11. Measuring device according to claim 5, characterized in that the upper tension wires (8) and the lower tension wires (9) are fixed to the sensing rod flanges (10, 10b) running radially.

12. Measuring device according to claim 6, characterized in that the upper tension wires (8) and the lower tension wires (9) are fixed to the sensing rod flanges (10, 10b) running oppositely tangentially.

**Revendications**

1. Dispositif à palpeur pour déterminer la position et/ou les dimensions d'objets à contrôler, comprenant au moins un palpeur monté sans frottement dans un carter, au moyen de filaments, et susceptible d'être dévié dans au moins une direction de coordonnée, ainsi qu'au moins un élément capteur afin de déceler la déviation du palpeur à partir d'une position de zéro définie, caractérisé en ce que le palpeur (4, 21), rigide en flexion, est monté aux deux parties d'extrémités (4a, 4b, 21a, 21b) directement dans le carter (2, 22), uniquement au moyen de filaments de tension (8, 9, 23, 24, 30) élastiques, et en ce que, à au moins une partie d'extrémité (4a, 4b, 21a) du palpeur (4, 21) rigide en flexion, les filaments de tension (8, 9, 23) élastiques sont placés sur une surface latérale de cône.

2. Dispositif de mesure selon la revendication 1, caractérisé en ce que le palpeur (4) rigide en flexion est monté, à la partie d'extrémité (4a) supérieure, au moyen de trois filaments de tension (8a, 8b, 8c) supérieurs élastiques, situés sur une surface latérale de cône, et, à la partie d'extrémité (4b) inférieure, au moyen de trois filaments de tension (9a, 9b, 9c) inférieurs élastiques, situés sur une surface latérale de cône, et en ce que les faces de base (12a, 12b), parallèles entre elles, des cônes formés par les filaments de tension (8a, 8b, 8c) supérieurs et par les filaments de tension (9a, 9b, 9c) inférieurs sont tournées l'une vers l'autre.

3. Dispositif de mesure selon la revendication 1, caractérisé en ce que le palpeur (21) rigide en flexion est monté, à la partie d'extrémité supérieure (21a), au moyen de trois filaments de tension (23a, 23b, 23c) supérieurs élastiques, situés sur une surface latérale de cône, et au moyen d'un filament de tension (30) élastique supplémentaire, et, à la partie d'extrémité (21b) inférieure, au moyen de trois filaments de tension (24a, 24b, 24c) inférieurs élastiques, disposés en étoile dans un même plan, en ce que la face de base (28) du cône formé par les filaments de tension (23a, 23b, 23c) supérieurs se développe parallèlement au plan (32) des filaments de tension (24a, 24b, 24c) inférieurs et est tournée vers celui-ci, et en ce que le filament de tension (30) supplémentaire se développe suivant la direction longitudinale du palpeur (21).

4. Dispositif de mesure selon la revendication 2, caractérisé en ce que les projections des axes longitudinaux tant des filaments de tension supérieurs que des inférieurs (8a, 8b, 8c, 9a, 9b, 9c) forment chaque fois une figure à symétrie radiale sur les faces de base (12a, 12b) des cônes qu'ils forment, et en ce que ces figures sont décalées l'une par rapport à l'autre d'un angle de rotation β.

5. Dispositif de mesure selon la revendication 4, caractérisé en ce que l'angle de rotation β = 30°.

6. Dispositif de mesure selon la revendication 2, caractérisé en ce que les trois filaments de tension (8a, 8b, 8c) supérieurs sont fixés sur le palpeur (4) au moyen d'une bride de palpeur (10a) supérieur et sur le carter (2) au moyen d'une bride de carter (11a) supérieure et les trois filaments de tension (9a, 9b, 9c) inférieurs sont fixes sur le palpeur (4) au moyen d'une bride de palpeur (10b) inférieure et sur le carter (2) au moyen d'une bride de carter (11b) inférieure.

7. Dispositif de mesure selon la revendication 3, caractérisé en ce que les trois filaments de tension (23a, 23b, 23c) supérieurs sont fixés sur le palpeur (21) au moyen d'une bride de palpeur (25a) supérieure et, sur le carter (22), au moyen d'une bride de carter (27a) supérieure, les trois filaments de tension (24a, 24b, 24c) inférieurs sont fixés sur le palpeur (21) au moyen d'une bride de palpeur (25b) inférieure et sur le carter (22) au moyen d'une bride de carter (27b) inférieure, et le filament de tension supplémentaire (30) est fixé sur la bride de palpeur (25a) supérieure et sur un couvercle (31) du carter (22).

8. Dispositif de mesure selon la revendication 1, caractérisé en ce que les filaments de tension (8, 9, 23, 30) élastiques sont réalisés sous forme d'éléments capteurs pour la mesure des déviations du palpeur (4, 21).

9. Dispositif de mesure selon la revendication 8, caractérisé en ce que les filaments de tension (8, 9, 23, 30) élastiques forment des résistances électriques.

10. Dispositif de mesure selon la revendication 1, caractérisé en ce que les filaments de tension (8, 9, 23, 30) élastiques sollicitent des éléments capteurs séparés.

11. Dispositif de mesure selon la revendication 6, caractérisé en ce que les filaments de tension supérieurs (8) et inférieurs (9) sont fixés sur les brides de palpeur (10a, 10b) en se développant radialement.

12. Dispositif de mesure selon la revendication 6, caractérisé en ce que les filaments de tension supérieurs (8) et les filaments de tension inférieurs (9) sont fixés sur les brides de palpeur (10a, 10b) en se développant chaque fois à contre-sens tangentiellement.

FIG. 1

FIG. 2

FIG. 4

FIG. 3

FIG. 6

FIG. 5